# EUROPÄISCHE PATENTSCHRIFT

(11) **EP 3 017 218 B1**
(45) Veröffentlichungstag und Bekanntmachung des Hinweises auf die Patenterteilung: **08.08.2018**
(21) Anmeldenummer: 14730074.3
(22) Anmeldetag: 02.06.2014
(51) Int. Cl.: F16K 3/26

(54) **STABILISIERTES VENTIL MIT FÜHRUNG**
STABILIZED VALVE WITH GUIDE
VANNE STABILISÉE À GUIDAGE

(30) Priorität: 03.07.2013 DE 202013102908 U
(43) Veröffentlichungstag der Anmeldung: 11.05.2016
(73) Patentinhaber: Sartorius Stedim Biotech GmbH, 37079 Göttingen (DE)
(72) Erfinder: FATHERAZI, Shahmir, 52078 Aachen (DE); LAUSCH, Ralf, 37079 Göttingen (DE); LOEWE, Thomas, 37077 Göttingen (DE); SCHÜSSLER, Ellen, 39393 Völpke (DE)
(74) Vertreter: Stehl, Astrid
(86) Internationale Anmeldenummer: PCT/EP2014/001480
(87) Internationale Veröffentlichungsnummer: WO 2015/000541

(56) Entgegenhaltungen:
- EP-A1- 0 691 492
- WO-A1-03/090843
- DE-U1- 8 907 185
- US-A- 5 435 339
- US-A1- 2009 229 671

## Beschreibung

Die vorliegende Erfindung betrifft ein Ventil mit einem darin angeordneten längsverschiebbaren Ventilkörper, wobei das Ventilgehäuse mindestens zwei Führungsnuten aufweist, in die von außen am Ventilkörper angeordnete Führungshilfsmittel eingreifen. Die Führungsnuten weisen eine Form auf, die eine gekoppelte translatorische und rotatorische Bewegung des Ventilkörpers mithilfe der Führungshilfsmittel zum Öffnen oder Schließen des Ventils vorgeben.

Als Ventile werden im Allgemeinen Bauteile bezeichnet, die zur Absperrung oder Regelung des Durchflusses von Fluiden (Flüssigkeiten und Gasen) eingesetzt werden. Dazu wird mithilfe eines Verschlussteils, dem Ventilkörper, die Strömung unterbrochen oder reduziert, indem das Verschlussteil die Öffnung, durch die das Fluid strömt, ganz oder teilweise verschließt. Daher eignen sich Ventile neben dem reinen Absperren von Stoffströmen auch zur Regelung von Fluidströmen.

Bei den meisten Ventilen erfolgt das Öffnen und Schließen durch eine Bewegung des Ventilkörpers innerhalb Ventilgehäuses.

Die DE 89 07 185 U1 offenbart eine Fluid-Absperrvorrichtung bestehend aus zwei Buchsen, in welchen Verschluss- und Absperrelemente angeordnet sind. Im geschlossenen Zustand werden diese mittels zweier Federn an die jeweiligen Dichtungsflächen gedrückt. Dabei werden die Hohlräume beider Buchsen von innen verschlossen. Eine der Buchsen weist zwei Zapfen auf, welche in an die andere Buchse angebrachte Führungsnuten eingreifen. Dadurch wird beim Öffnen bzw. Verschließen des Systems die Richtung der Bewegung vorgegeben.

Aus der EP 0 691 492 A1 ist ein Ventil bekannt, bei dem sich der als Hohlkolben mit einem geschlossenen Ende geformte Ventilkörper aufgrund der Drehbewegung einer Überwurfmutter in axialer Richtung bewegt. Dabei steht das Gewinde der Überwurfmutter über gezahnte Führungshilfsmittel mit dem Ventilkörper in Kontakt, wobei diese am Ventilkörper von Innen durch Aussparungen im Ventilgehäuse in das Gewinde der Überwurfmutter greifen.

Die US 2009/0229671 A1 offenbart einen Einweg-Konnektor zum sterilen Transfer von Fluiden, bei dem die Bewegung des Ventilkörpers gezielt geführt und begrenzt wird. Diese Art der geführten Bewegung ist von sogenannten Bajonettverschlüssen bekannt. Dazu wird eine Art Noppe, Zapfen oder Stift in einem Führungsschlitz oder einer Führungsnut zum Öffnen und Schließen des Ventils bewegt. Dadurch wird eine Rotationsbewegung mit einer Bewegung in axialer Richtung verknüpft. Die Noppen dienen dabei sowohl der geführten Bewegung als auch zur Fixierung des Ventilkörpers innerhalb des Ventilgehäuses.

EP 2292297 A1 offenbart ein Ventil das im geschlossenen Zustand über einen Dorn am Ventilgehäuse mit dem Ventilkörper verbunden wird. Der Dorn dient somit als zusätzliche Sicherung um das Ventil im geschlossenen Zustand zu halten. Ähnlich wie bei der US 2009/0229671 A1 wird das Ventil gemäß EP 2292297 A1 über eine Art Bajonettverschluss zwischen dem geschlossenen und dem geöffneten Zustand geführt bewegt.

Ein ähnliches Ventil ist aus dem Dokument US 5,435,339 bekannt.

Je nach Verwendung des Ventils werden an die funktionellen Parameter jedoch unterschiedliche Anforderungen gestellt. Bei den oben beschriebenen Durchgangsventilen kann es vorkommen, dass der Ventilkörper bei einer übermäßigen axialen Druckbeaufschlagung trotz der geführten Noppen aus dem Ventilgehäuse gedrückt wird. Darüber hinaus lassen viele Bajonettführungen, insbesondere bei manueller Bedienung, keine einzelne fließende Bewegung zu, da der Ventilkörper durch umständliches Drehen und Ziehen am Ventilauslass innerhalb des Ventilgehäuses bewegt wird.
Aufgabe der vorliegenden Erfindung ist es daher ein Ventil bereit zu stellen mit dem die aus dem Stand der Technik bekannten Nachteile vermieden bzw. deutlich reduziert werden.
Diese Aufgabe wird durch ein Ventil mit einem Ventilgehäuse und einem darin angeordneten längsverschiebbaren Ventilkörper gelöst, wobei das Ventilgehäuse mindestens zwei Führungsnuten aufweist, in die von außen am Ventilkörper angeordnete Führungshilfsmittel eingreifen und wobei die Führungsnuten eine Form aufweisen, die eine gekoppelte translatorische und rotatorische Bewegung des Ventilkörpers mithilfe der Führungshilfsmittel zum Öffnen oder Schließen des Ventils vorgeben. Im Unterscheid zu Ventilkörpern in Form von Hohlkolben, weist der vorliegende Ventilkörper eine durchgängige Bohrung vom Ventilauslass bis zur Stirnseite auf. Die durchgängige Bohrung weist über die gesamte Länge einen gleichbleibenden Querschnitt, einen kleiner werdenden Querschnitt zur Stirnseite, oder einen kleiner werdenden Querschnitt zum Ventilauslass hin auf.
Unter "Führungshilfsmittel" wird jede Art von Hilfsmitteln verstanden, die an den Ventilkörper angebracht werden kann und in die Führungsnuten eingreifen. Dadurch wird ein Überdrehen oder Herausdrehen des Ventilkörpers verhindert. Durch die äußerlich angebrachten Führungshilfsmittel ergibt sich außerdem ein Hebel, der zu mehr Stabilität des gesamten Ventils führt. Bei einer manuell zu bedienenden Ausführungsform führt der Hebel außerdem zu einer verbesserten Bedienbarkeit, da die Betätigungsfläche durch den Hebel vergrößert wird. Die Führungshilfsmittel können durch die Führungsnuten hindurch mit dem Ventilkörper verbunden werden, oder aber in einem geringfügigen Abstand zum Ventilkörper frei in der Führungsnut liegen und lediglich an der Ventilauslassseite mit dem Ventilkörper verbunden sein.

Ein weiterer positiver Effekt der Führungshilfsmittel ist, dass selbst bei erhöhtem Druck auf die Stirnfläche des Ventilkörpers ein Heraussprengen des Ventilkörpers aus dem Ventilgehäuse verhindert wird. Gerade die besondere Anordnung der Führungshilfsmittel von außen am Ventilkörper erweist sich dabei als eine Sicherung, die bei Druckbeaufschlagung des Ventils den Ventilkörper im Gehäuse hält. Dieser positive Effekt tritt besonders bei einer geschlossenen Stirnfläche des Ventilkörpers und einer geschlossenen Verbindung der Führungshilfsmittel durch die Führungsnuten auf.

Unter "Führungsnuten" werden dabei die Öffnungen im Ventilgehäuse verstanden, in die die Führungshilfsmittel eingreifen. Die Führungsnuten können als Nuten oder Schlitze ausgeformt sein. Als klassische Nut wird dabei eine längliche Vertiefung bezeichnet, während ein Schlitz eine durchgehende Öffnung im Ventilgehäuse darstellt. Die Führungsnuten sind dementsprechend Vertiefungen oder Schlitze ausgeformt.
Die Form ist jedoch insofern vorgegeben, dass die dadurch geführte Bewegung des Ventilkörpers immer eine gekoppelte translatorische und rotatorische Bewegung ergibt. Ein starrer Körper hat normalerweise gegenüber einem Bezugssystem sechs Bewegungsmöglichkeiten, sogenannte Freiheitsgrade. Von den 6 möglichen Bewegungsfreiheitsgraden, d.h. 3 translatorische und 3 rotatorische, werden diese je nach Aufgabe eines Ventils, auf verschiedenste Art und Weise eingeschränkt, wobei Axialführungen oder Gewinde übliche Maßnahmen darstellen. Diese führen in der Regel jedoch zu einer ungewollten Komplexität der Vorrichtung und bedeutet zusätzlichen Aufwand in der Herstellung. Daher ist es ein weiterer Vorteil der vorliegenden Erfindung, dass die Bewegungsfreiheitsgrade durch eine gekoppelte translatorische und rotatorische Bewegung mithilfe der Führungshilfsmittel eingeschränkt werden können und zu einer gerichteten Bewegung des Ventilkörpers führen. In einer weiteren Ausführungsform, erfolgt die rotatorische Bewegung des Ventilkörpers in einem Winkel ≤ 120°, vorzugsweise zwischen 30° und 90°, besonders bevorzugt zwischen 40° und 70°, wobei die Endpunkte mit einbezogen sind. Dies ist jedoch auch abhängig von der genauen Anzahl und Anordnung der Führungsnuten im Ventilgehäuse und Führungshilfsmittel am Ventilkörper. Das Material und die spezifische Anwendung stellen darüber hinaus auch wesentliche Gesichtpunkte.

Durch die geschlossene Führung innerhalb der Nut, ist außerdem kein Verkeilen oder Verklemmen mehr möglich, was wiederrum eine enorme Verbesserung darstellt. Dabei ist es besonders vorteilhaft, dass die Bewegung des Ventilkörpers sowohl translatorisch als auch rotatorisch zugleich abläuft. Vorläufermodellen des erfindungsgemäßen Ventils funktionierten so, dass beim Öffnen des Ventils der Ventilkörper in einem ersten Bewegungsschritt rotatorisch bewegt und anschließend in einem zweiten Bewegungsschritt in axialer Richtung rausgezogen wurde. Allein die Summe aus zwei Bewegungsschritten ist sowohl von der Bedienbarkeit als auch von der Gefahr eines Verklemmens oder Verkeilens sehr viel unkomfortabler als die erfindungsgemäße Lösung, bei der nur eine gekoppelte fließende Bewegung erfolgt. Dies wirkt sich wiederrum zusätzlich positiv auf die Bedienbarkeit aus, da sich der Ventilkörpers so deutlich einfacher bewegen lässt.

In einer Ausführungsform weist das Ventilgehäuse um die Führungsnuten verstärkte Materialbereiche auf. Diese Verstärkung kann z.B. in Form einer Wulst um den Rand der Nut ausgestaltet sein. Dadurch entsteht eine Erhebung im Randbereich, die sowohl zu einer Stabilisierung der Nut selbst als auch zu einer Stabilisierung der darin beweglich angeordneten Führungshilfsmittel führt. Alternativ kann der gesamte Umfang des Ventilgehäuses im Bereich der Führungsnuten verstärkt sein.

In einer weiteren Ausführungsform der vorliegenden Erfindung weist der Ventilkörper zusätzliche Führungshilfsmittel auf, die von innen in die Führungsnuten eingreifen und den von außen eingreifenden Führungshilfsmitteln gegenüber angeordnet sind. Diese zusätzlichen Führungshilfsmittel sind dazu fest mit dem Ventilkörper verbunden und werden je nach Größe und Material des Ventils entweder vor dem Einbringen des Ventilkörpers in das Ventilgehäuse mit dem Ventilkörper fest verbunden, oder aber nach dem Einschieben des Ventilkörpers in das Ventilgehäuse von außen durch die Führungsnut auf den Ventilkörper montiert. Je nach Material und Größe des Ventils können die zusätzlichen Führungshilfsmittel aufgeklebt, aufgespritzt, aufgeschraubt oder in anderer Form an dem Ventilkörper befestigt werden. Alternativ bilden sie zusammen mit dem Ventilkörper eine fertigungstechnische Einheit, z.B. bei Spritzgussteilen aus Kunststoff.

Durch die zusätzlichen Führungshilfsmittel, die von innen angeordnet sind, wird das Ventil noch stabiler und die Führung des Ventilkörpers innerhalb des Gehäuses von innen gestützt. Die äußeren und inneren Führungshilfsmittel können dabei innerhalb der Führungsnut aufeinander treffen, leicht beabstandet oder aber leicht versetzt nebeneinander in der Nut angeordnet sein. Dies hängt auch vom Material und der Größe des Ventils ab.

In einer bevorzugten Ausführungsform, weisen die zusätzlichen Führungshilfsmittel eine Noppenform auf. Unter "noppenförmig" wird dabei eine kleine eher rundliche oder zylindrische Erhebung verstanden. Es sind daher auch Zapfen oder Stifte als zusätzliche Führungshilfsmittel möglich. Allen Formen gemeinsam ist lediglich ihre Eignung zu einer fließenden Bewegung innerhalb der Führungsnut. Darüber hinaus wird der Ventilkörper durch die zusätzlichen Führungshilfsmittel in den Führungsnuten gehalten.

In einer weiteren Ausführungsform weist der Ventilkörper einen Ventilauslass und die Führungshilfsmittel mindestens an der dem Ventilauslass zugewandten Seite eine stabile Verbindung mit dem Ventilkörper auf. Auch hier hängt die Art der Verbindung wiederrum stark von Größe und Material des Ventils ab. Der Ventilauslass ist entsprechend den gewünschten Anschlüssen geformt, so dass entweder ein Schlauch oder ein Rohr angeschlossen werden kann. Auch der Ventileinlass kann je nach Bauart entsprechend ausgeformt sein. Bevorzugt wird das erfindungsgemäße Ventil jedoch für Behälter eingesetzt und in diese baulich integriert, so dass der Ventileinlass auf der Behälterinnenseite liegt.

In einer bevorzugten Ausführungsform ist die stabile Verbindung zwischen den Führungshilfsmitteln und dem Ventilkörper eine Schweißverbindung, Schraubverbindung, Klippverbindung oder formschlüssige Verbindung. Bei Ventilen in Kunststoffausführung werden dabei eher Schweiß- oder Klebeverbindungen im Vordergrund stehen. Alternativ können die Ventilkörper zusammen mit den Führungshilfsmitteln als Spritzgussformteile gefertigt werden und somit als bauliche Einheit gesehen werden. Wenn die Ventile aus härteren Materialien gefertigt werden, z.B. Edelstahl, sind die Verbindungen zwischen den Führungshilfsmitteln und dem Ventilkörper eher als Schraub- oder Steckverbindungen ausgeführt. Auch Klippverbindungen sind sowohl in Kunststoff als auch in anderen Materialien ausführbar.

In einer weiteren Ausführungsform bestehen die Führungshilfsmittel aus jeweils bis zu 3 Teilen. Sowohl die von außen in die Führungsnuten eingreifenden Führungshilfsmittel als auch die zusätzlichen Führungshilfsmittel können z.B. als separate Bauteile vorliegen und über Schrauben, Stifte, Klemmen, Klipps oder andere zusätzliche Bauteile mit dem Ventilkörper verbunden werden. Je nach Material des gesamten Ventils kann die Ausführung in mehreren Teilen eine besonders bevorzugte darstellen. Bei Ventilen aus Edelstahl ist es aufgrund der mangelnden Flexibilität des Werkstoffes nicht möglich den Ventilkörper mit den Führungshilfsmitteln in das Ventilgehäuse zu schieben. Daher ist die dreiteilige Bauform für Ausführungen in Edelstahl besonders geeignet. Eine bevorzugte Ausführungsform sieht dabei den Verzicht auf zusätzliche Führungshilfsmittel von innen vor, da die von außen angebrachten Führungshilfsmittel durch die Führungsnuten mit dem Ventilkörper z.B. über einen Dorn oder eine Verschraubung verbunden werden. Hierzu wird am Ventilkörper ein Gewinde oder eine Öffnung vorgesehen, in das die Schraube oder in die der Stift von außen eingebracht werden kann. Zusätzliche Führungshilfsmittel entfallen somit. Erfindungsgemäß weist das Ventil eine Ventilkammer auf, die im geschlossenen Zustand über zwei Dichtungen nach außen hin abgedichtet ist. Im geschlossenen Zustand sorgen die Dichtungen also dafür, dass die Ventilkammer nur zum Inneren des Gehäuses hin geöffnet ist. Umgekehrt wird durch das Öffnen des Ventils ein Zugang nach außen hin geschaffen. Im geöffneten Zustand liegt somit die vom Ventilauslass weiter entfernt liegende Dichtung frei, während die dem Ventilauslass näher liegende Dichtung die Ventilkammer nach außen abdichtet.

In einer bevorzugten Ausführungsform sind die Dichtungen im Mehrkomponenten-Spritzgusssystem auf den Ventilkörper aufgebracht. Dadurch werden die zwei Dichtungen quasi direkt auf dem Ventilkörper ausgeformt und gleichzeitig in einem Bauteil vereint. Bei den sonst üblichen Dichtungsringen können sich diese aufgrund der mechanischen Belastung beim Öffnen und Schließen innerhalb des Ventilgehäuses leicht verhaken. Demgegenüber bietet die einteilige Bauform, bei der die Ventilkammer zusammen mit den zwei Dichtungen als Spritzgussteil auf den Ventilkörper aufgebracht wird, keine Angriffsfläche, die ein Verhaken oder Verschieben der Dichtungen möglich macht.

In einer weiteren Ausführungsform ist das Ventil aus Kunststoffmaterial gefertigt. In einer besonderen Ausführungsform wird das Ventil aus einem oder mehreren Thermoplasten, ausgewählt aus der Gruppe von Polyethylen (PE), High Density Polyethylen (HDPE), Polypropylen (PP), Polyvinylchlorid (PVC), Polycarbonat (PC), Copolyester, Acrylstyrolbutadiencopoloymer (ABS) oder Styrolacrynitril (SAN), Polybutylenterephtalat (PBT); einem Elastomer, ausgewählt aus der Gruppe von Ethylen-Propylen-Dien-Monomer (EPDM) und Flüssigsilikon (LSR); einem thermoplastischen Elastomer (TPE), vorzugsweise auf Urethanbasis oder als Styrol-Blockcopolymer; einem Mehrkomponentenkunststoff, ausgewählt aus einer Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP), hergestellt.

Wie bereits zuvor beschrieben, ist die Auswahl des Kunststoffes sowohl von der gewünschten Anwendung des Ventils als auch von den Kosten für ihr Herstellungsverfahren abhängig. In einer speziellen Ausführungsform ist das Ventil als Einwegartikel gedacht, so dass für solche Anwendungen schon aus Kostengründen die bekannten Thermoplaste Polyethylen oder Polypropylen verwendet werden. Bei den Mehrkomponentenkunststoffen lassen sich gewünschte Materialeigenschaften miteinander kombinieren. Hierbei stellt ein Mehrkomponentensystem bei dem unter anderem Polybutylenterephtalat (PBT) verwendet wird eine bevorzugte Ausführungsform dar.

In einer weiteren Ausführungsform ist das Ventil im Spritzgussverfahren, vorzugsweise Mehrkomponenten-Spritzgussverfahren, durch Extrusion, durch mechanische Bearbeitung eines Kunststoffrohling, vorzugsweise durch Drehen und/oder Fräsen, oder durch ein Prototypingverfahren, ausgewählt aus der Gruppe von Vakuumdruckgussverfahren, 3D-Druckverfahren, Lasers intern oder Stereolithographie, hergestellt.

Auch hier hängt die Wahl des Verfahrens im Wesentlichen von der Wahl des verwendeten Kunststoffes ab, da nicht jeder Kunststoff gleichermaßen für jedes Fertigungsverfahren geeignet ist. Die Wahl des Kunststoffes wiederum hängt stark von der Anwendung ab. Hier spielen die individuellen Belastungsparameter durch Druck, Temperatur, mechanische Beanspruchung, Medienbeständigkeit, Sterilisierbarkeit sowie die Eignung für bestimmte Anwendungen z.B. im pharmazeutischen oder medizinischen Bereich, eine entscheidende Rolle. Erfindungsgemäß wird der Ventilkörper radial angeströmt. Dadurch verteilt sich der Druck in der Ventilkammer sehr gleichmäßig auf die beiden Dichtungen. In Folge dessen wird so ein Heraussprengen des Ventilkörpers aus dem Ventilgehäuse zusätzlich erschwert.

In einem weiteren Aspekt der vorliegenden Erfindung wird das Ventil als Einwegprodukt verwendet. Aufgrund der hohen Sterilitätsanforderungen sind sogenannte "single use"-Produkte zur Produktion insbesondere im Pharmabereich, in der Medizin, aber auch im Lebensmittelbereich immer häufiger anzutreffen. Mit dem hier beschriebenen Ventil wird ein weiterer Baustein für einen automatisierten Produktionsprozess im Einwegsystem bereitgestellt. Um die Kontaminierung zu minimieren oder sogar komplett auszuschließen, ist das Ventil nicht nur für den Einbau vor Ort gedacht, sondern findet insbesondere als integrierter Bestandteil in einem geschlossenen Einweg-Fluidsystem, z.B. als Ventil an Filterkapsulen, Filtergehäusen oder bedampfbaren Hybridsystemen Anwendung.

In einer bevorzugten Ausführungsform ist das Ventil sterilisierbar, vorzugsweise durch Strahlensterilisation, besonders bevorzugt durch Gammastrahlensterilisation oder Elektronenstrahlensterilisation. Die Art der Sterilisation ist dabei von der Verwendung des Ventils im Gesamtsystem und dem auf der Anwendungsseite gewünschten Grad der Sterilisation abhängig. Bei den zuvor beschriebenen Einweg-Lösungen wird das Ventil als integriertes Bauteil z.B. in einer Filterkapsule verwendet und mit dieser zusammen als Gesamtpaket verpackt und anschließend nach einem der genannten Verfahren, z.B. mittels Gammasterilisation, sterilisiert.

Weitere Ausführungsformen der Erfindung ergeben sich aus den Zeichnungen, die die vorliegende Erfindung jedoch in keiner Form einschränken, sondern lediglich zur Veranschaulichung konkreter Ausführungsformen dienen.

### Figurenbeschreibung:

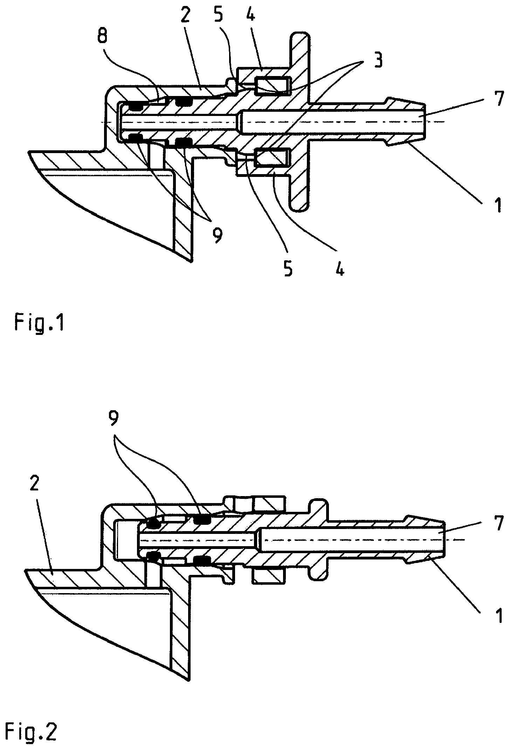

Fig. 1 ist ein vertikaler Querschnitt durch das geschlossene Ventil. In dieser Ausführungsform ist es als Bauteil in einen Behälter integriert, der sich an das Ventil anschließt. Der Ventilkörper 1 ist im Ventilgehäuse 2 angeordnet. In die Führungsnuten 3 greifen die Führungshilfsmittel 4 von außen ein. Die zusätzlichen Führungshilfsmittel 5 liegen den äußeren von innen gegenüber. Zwischen den Dichtungen 9 wird die Ventilkammer 8 geformt. Über den Ventilauslass 7 verbindet das Ventil den Behälter mit angeschlossenen Systemen.
Fig. 2 ist ein vertikaler Querschnitt durch das geöffnete Ventil. Auch hier sieht man das sich anschließende Ventilgehäuse 2 als integriertes Bauteil in einem sich anschließenden Behälter. Der Ventilkörper 1 ist in das Gehäuse eingebaut. An den Ventilauslass 7 kann ein Schlauch oder Rohr angeschlossen werden. Die Dichtungen 9 sind ebenfalls zu erkennen. Die vom Ventilauslass 7 weiter entfernt liegende Dichtung liegt dabei frei. Fluid kann somit vom Behälter über das Ventil ausströmen oder umgekehrt in den Behälter einströmen.

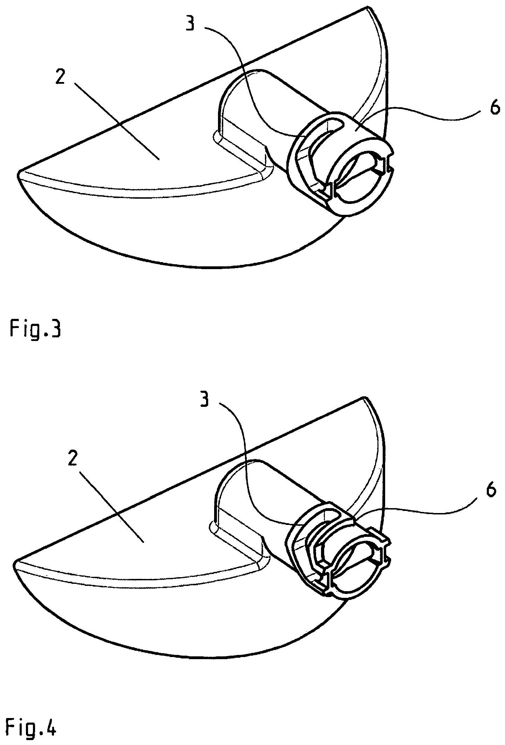

Fig. 3 zeigt eine perspektivische Darstellung des Ventilgehäuses 2 mit dem durchgängig um die Führungsnuten 3 verstärkten Materialbereich 6.
Fig. 4 zeigt ebenfalls eine perspektivische Darstellung des Ventilgehäuses 2 mit dem verstärkten Materialbereich 6 als Rand um die Führungsnuten 3.

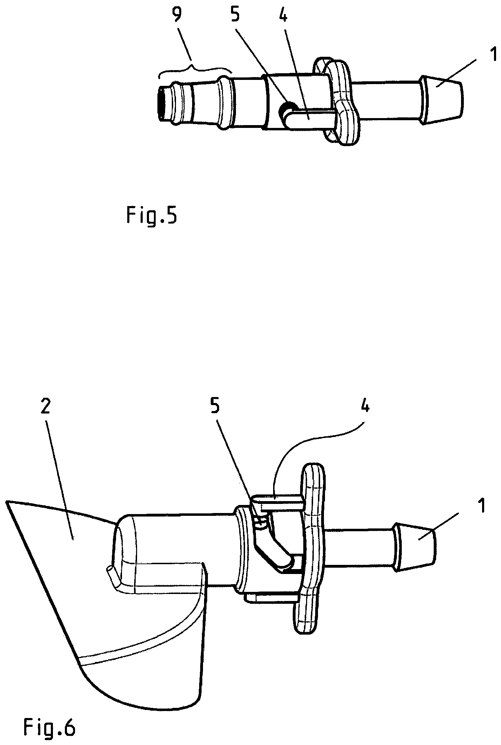

Fig. 5 zeigt eine perspektivische Darstellung des Ventilkörpers 1 mit den Führungshilfsmitteln 4 und den gegenüberliegenden zusätzlichen Führungshilfsmitteln 5 sowie den Dichtungen 9.
Fig. 6 zeigt eine perspektivische Darstellung des Ventilkörpers 1 im Ventilgehäuse 2. Die von außen eingreifenden Führungshilfsmitteln 4 sowie die innen liegenden zusätzlichen Führungshilfsmittel 5 sind ebenfalls dargestellt.

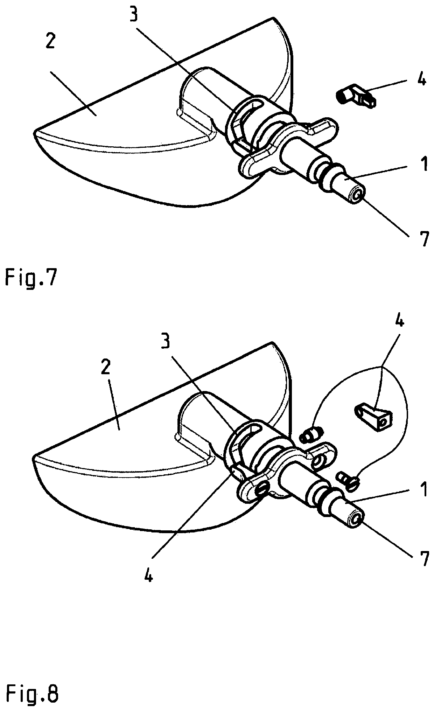

Fig. 7 zeigt eine perspektivische Darstellung des Ventils mit einem Ventilkörper 1 und zwei von außen angebrachten Führungshilfsmitteln 4, die als Klipp von außen durch die Führungsnut 3 am Ventilkörper 1 angebracht werden, nachdem der Ventilkörper 1 in das Ventilgehäuse 2 eingeschoben wurde. An den Ventilauslass 7 kann ein Schlauch oder Rohr angeschlossen werden.
Fig. 8 zeigt eine perspektivische Darstellung des Ventils mit Führungshilfsmitteln 4 aus jeweils drei Teilen, die nach dem Einbringen des Ventilkörpers 1 in das Ventilgehäuse 2 mit dem Ventilkörper 1 verschraubt werden. Durch die Führungsnuten 3 führt eine Steckverbindung, die ebenfalls Bestandteil der Führungshilfsmittel 4 ist, und mit dem Ventilkörper 1 verbunden wird. An den Ventilauslass 7 kann ein Schlauch oder Rohr angeschlossen werden.

### Bezugszeichenliste:

- 1: Ventilkörper
- 2: Ventilgehäuse
- 3: Führungsnuten
- 4: Führungshilfsmittel
- 5: zusätzliche Führungshilfsmittel
- 6: verstärkte Materialbereiche
- 7: Ventilauslass
- 8: Ventilkammer
- 9: Dichtungen

## Patentansprüche

1. Ventil mit einem Ventilgehäuse (2) und einem darin angeordneten längsverschiebbaren Ventilkörper (1) mit einer Stirnseite, wobei das Ventilgehäuse (2) mindestens zwei Führungsnuten (3) aufweist, in die am Ventilkörper (1) angeordnete Führungshilfsmittel (4) eingreifen, wobei die Führungsnuten (3) eine Form aufweisen, die eine gekoppelte translatorische und rotatorische Bewegung des Ventilkörpers (1) mithilfe der Führungshilfsmittel (4) zum Öffnen oder Schließen des Ventils vorgeben, der Ventilkörper (1) eine durchgängige offene Bohrung und eine Ventilkammer (8) aufweist, wobei die Ventilkammer (8) im geschlossenen Zustand über zwei Dichtungen (9) nach außen hin abgedichtet ist und der Ventilkörper (1) radial anströmbar ist, **dadurch gekennzeichnet, dass** der Ventilkörper (1) einen Ventilauslass (7) aufweist, die durchgängige offene Bohrung sich vom Ventilauslass (7) bis zur Stirnseite erstreckt, und die Führungshilfsmittel (4) von außen in die mindestens zwei Führungsnuten (3) eingreifen.

2. Ventil nach Anspruch 1, **dadurch gekennzeichnet, dass** der Ventilkörper (1) zusätzliche Führungshilfsmittel (5) aufweist, die von innen in die Führungsnuten (3) eingreifen und den von außen eingreifenden Führungshilfsmitteln (4) gegenüber angeordnet sind.

3. Ventil nach Anspruch 2, **dadurch gekennzeichnet, dass** die zusätzlichen Führungshilfsmittel (5) eine Noppenform aufweisen.

4. Ventil nach einem der vorhergehenden Ansprüche, **dadurch gekennzeichnet, dass** das Ventilgehäuse (2) im Bereich um die Führungsnuten (3) verstärkte Materialbereiche (6) aufweist.

5. Ventil nach einem der vorhergehenden Ansprüche, **dadurch gekennzeichnet, dass** die Führungshilfsmittel (4) mindestens an der dem Ventilauslass (7) zugewandten Seite eine stabile Verbindung mit dem Ventilkörper (1) aufweisen.

6. Ventil nach Anspruch 5, **dadurch gekennzeichnet, dass** die stabile Verbindung zwischen den Führungshilfsmitteln (4) und dem Ventilkörper (1) eine Schweißverbindung, Schraubverbindung, Klippverbindung oder formschlüssige Verbindung ist.

7. Ventil nach einem der vorhergehenden Ansprüche, **dadurch gekennzeichnet, dass** die Führungshilfsmittel (4, 5) aus jeweils bis zu drei Teilen bestehen.

8. Ventil nach Anspruch 1, **dadurch gekennzeichnet, dass** die Dichtungen (9) im Mehrkomponenten-Spritzgusssystem auf den Ventilkörper (2) aufgebracht sind.

9. Ventil nach einem der vorhergehenden Ansprüche, **dadurch gekennzeichnet, dass** das Ventil aus Kunststoffmaterial gefertigt ist.

10. Ventil nach einem der vorhergehenden Ansprüche, **dadurch gekennzeichnet, dass** das Ventil als Einwegprodukt ausgebildet ist.

11. Ventil nach einem der vorhergehenden Ansprüche, **dadurch gekennzeichnet, dass** die Führungsnuten als Vertiefungen oder Schlitze ausgeformt sind.

## Claims

1. Valve with a valve housing (2) and a longitudinally displaceable valve body (1), which is arranged therein, with an end face, wherein the valve housing (2) has at least two guide grooves (3) in which guidance assisting means (4) arranged at the valve body (1) engage, wherein the guide grooves (3) have a shape which predetermines a coupled translational and rotational movement of the valve body (1) with the help of the guidance assisting means (4) for opening or closing the valve, the valve body (1) has a continuous open bore and a valve chamber (8), wherein the valve chamber (8) in the closed state is sealed outwardly by way of two seals (9), and the valve body (1) can be subjected to radial incident flow, **characterised in that** the valve body (1) has a valve outlet (7), the continuous open bore extends from the valve outlet (7) to the end face, and the guidance assisting means (4) engage from the outside in the at least two guide grooves (3).

2. Valve according to claim 1, **characterised in that** the valve body (1) has additional guidance assisting means (5) which engage from inside in the guide grooves (3) and are arranged opposite the guidance assisting means (4) engaging from the outside.

3. Valve according to claim 2, **characterised in that** the additional guidance assisting means (5) have a nub shape.

4. Valve according to any one of the preceding claims, **characterised in that** the valve housing (2) has reinforced material regions (6) in the area around the guide grooves (3).

5. Valve according to any one of the preceding claims, **characterised in that** the guidance assisting means (4) have a stable connection with the valve body (1) at least at the side facing the valve outlet (7).

6. Valve according to claim 5, **characterised in that** the stable connection between the guidance assisting means (4) and the valve body (1) is a weld connection, screw connection, clip connection or mechanically positive connection.

7. Valve according to any one of the preceding claims, **characterised in that** the guidance assisting means (4, 5) consist in each instance of up to three parts.

8. Valve according to claim 1, **characterised in that** the seals (9) are mounted on the valve body (2) in a multi-component injection-moulding system.

9. Valve according to any one of the preceding claims, **characterised in that** the valve is made of plastics material.

10. Valve according to any one of the preceding claims, **characterised in that** the valve is constructed as a disposable product.

11. Valve according to any one of the preceding claims, **characterised in that** the guide grooves are formed as recesses or slots.

## Revendications

1. Soupape avec un logement de soupape (2) et, agencé en son intérieur, un corps de soupape (1) pouvant être déplacé longitudinalement avec un côté frontal, dans laquelle le logement de soupape (2) présente au moins deux rainures de guidage (3) dans lesquelles s'engagent des moyens de guidage (4) agencés contre le corps de soupape (1), dans laquelle les rainures de guidage (3) présentent une forme qui prédéfinissent un mouvement couplé de translation et de rotation du corps de soupape (1) à l'aide des moyens de guidage (4) pour l'ouverture ou la fermeture de la soupape, le corps de soupape (1) présente un alésage traversant ouvert et une chambre de soupape (8), dans laquelle la chambre de soupape (8) à l'état fermé est rendue étanche vers l'extérieur par deux joints d'étanchéité (9) et le corps de soupape (1) peut recevoir un écoulement radialement, **caractérisé en ce que** le corps de soupape (1) a une sortie de soupape (7), l'alésage traversant ouvert s'étend de la sortie de soupape (7) jusqu'au côté frontal, et les moyens de guidage (4) s'engagent depuis l'extérieur dans les au moins deux rainures de guidage (3).

2. Soupape selon la revendication 1, **caractérisée en ce que** le corps de soupape (1) présente des moyens de guidage (5) complémentaires qui s'engagent depuis l'intérieur dans les rainures de guidage (3) et son agencés de façon opposée aux moyens de guidage (4) s'engageant depuis l'extérieur.

3. Soupape selon la revendication 2, **caractérisée en ce que** les moyens de guidage (5) complémentaires présentent une forme de bouton.

4. Soupape selon l'une quelconque des revendications précédentes, **caractérisée en ce que** le logement de soupape (2) présente des zones de matériau (6) renforcées dans la zone autour des rainures de guidage (3).

5. Soupape selon l'une quelconque des revendications précédentes, **caractérisée en ce que** les moyens de guidage (4) présentent au moins sur le côté tourné vers la sortie de soupape (7) une liaison stable avec le corps de soupape (1).

6. Soupape selon la revendication 5, **caractérisée en ce que** la liaison stable entre les moyens de guidage (4) et le corps de soupape (1) est une liaison par soudage, une liaison vissée, une liaison à encliquetage ou une liaison de forme.

7. Soupape selon l'une quelconque des revendications précédentes, **caractérisée en ce que** les moyens de guidage (4, 5) sont respectivement constitués de jusqu'à trois parties.

8. Soupape selon la revendication 1,
**caractérisée en ce que** les joints d'étanchéité (9) sont disposés sur le corps de soupape (2) dans le système de moulage par injection à plusieurs composants.

9. Soupape selon l'une quelconque des revendications précédentes, **caractérisée en ce que** la soupape est fabriquée dans un matériau plastique.

10. Soupape selon l'une quelconque des revendications précédentes, **caractérisée en ce que** la soupape est réalisée en tant que produit jetable.

11. Soupape selon l'une quelconque des revendications précédentes, **caractérisée en ce que** les rainures de guidage sont formées en tant qu'évidements ou fentes.
